(19) Europäisches Patentamt European Patent Office Office européen des brevets

(11) **EP 3 486 864 B1**

(12) **EUROPEAN PATENT SPECIFICATION**

(45) Date of publication and mention of the grant of the patent:
**09.09.2020 Bulletin 2020/37**

(51) Int Cl.:
**G06T 3/40** (2006.01)  **G06T 5/00** (2006.01)

(21) Application number: **17202624.7**

(22) Date of filing: **20.11.2017**

(54) **ISOTROPIC 3D IMAGE RECONSTRUCTION USING 3D PATCHES-BASED SELF-SIMILARITY LEARNING**

ISOTROPE 3D-BILDREKONSTRUKTION MIT AUF 3D-PATCHES BASIERTEM SELBSTÄHNLICHKEITSLERNEN

RECONSTRUCTION D'IMAGES 3D ISOTROPES UTILISANT UN APPRENTISSAGE D'AUTO-SIMILARITÉ BASÉ SUR DES PATCHES 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.05.2019 Bulletin 2019/21**

(73) Proprietors:
• **Technische Universität München**
 **80333 München (DE)**
• **Institut National de la Santé et de la Recherche Médicale (INSERM)**
 **75013 Paris (FR)**

(72) Inventors:
• **BUSTIN, Aurélien**
 **45640 Sandillon (FR)**
• **ODILLE, Freddy**
 **88460 La Baffe (FR)**

(74) Representative: **IPAZ**
 **Parc Les Algorithmes, Bâtiment Platon CS 70003 Saint-Aubin**
 **91192 Gif-sur-Yvette Cedex (FR)**

(56) References cited:
**US-A1- 2015 287 223**

• **ALAA A. HEFNAWY: "An efficient super-resolution approach for obtaining isotropic 3-D imaging using 2-D multi-slice MRI", EGYPTIAN INFORMATICS JOURNAL, vol. 14, no. 2, 1 July 2013 (2013-07-01), pages 117-123, XP055469126, AMSTERDAM, NL ISSN: 1110-8665, DOI: 10.1016/j.eij.2013.03.003**
• **F. ODILLE; A. BUSTIN; B. CHEN; P. VUISSOZ; J. FELBLINGER: "Motion-Corrected, Super-Resolution Reconstruction for High-Resolution 3D Cardiac Cine MRI", MED. IMAGE COMPUT. COMPUT. ASSIST. INTERV., vol. 9351, 2015, pages 435-442, XP002780447,**
• **MARC LEBRUN ET AL: "An Implementation and Detailed Analysis of the K-SVD Image Denoising Algorithm", IMAGE PROCESSING ON LINE, vol. 2, 19 May 2012 (2012-05-19), pages 96-133, XP055469852, DOI: 10.5201/ipol.2012.llm-ksvd**
• **AURELIEN BUSTIN ET AL: "Isotropic Reconstruction of MR Images using 3D Patch-Based Self-Similarity Learning", IEEE TRANSACTIONS ON MEDICAL IMAGING., 1 January 2018 (2018-01-01), pages 1-1, XP055469168, US ISSN: 0278-0062, DOI: 10.1109/TMI.2018.2807451**

EP 3 486 864 B1

**Description**

The present invention concerns a method for producing an isotropic three-dimensional (3D) image. It also concerns a device and a system for producing such an isotropic 3D image.

Isotropic 3D acquisition is a challenging task in Magnetic Resonance Imaging (MRI). Particularly in cardiac MRI, due to hardware and time limitations, current 3D acquisitions are limited by low-resolution, especially in the through-plane direction, leading to poor image quality in that dimension. To overcome this problem, super-resolution (SR) techniques have been proposed to reconstruct a single isotropic 3D volume from multiple anisotropic acquisitions. Previously, local regularization techniques such as Total Variation (TV) have been applied to limit noise amplification while preserving sharp edges and small features in the images.

Magnetic Resonance Imaging (MRI) is a versatile imaging modality but its main limitation remains the need for choosing, at the acquisition stage, a compromise between signal/contrast-to-noise ratio, resolution and scan time. In clinical cardiac MRI, the scan time is most often constrained by the maximal breath-holding period achievable by the patient which is typically 20-25 s. As a result, acquiring 3D isotropic cardiac images with high spatial resolution (i.e. 1 to 1.5 mm voxel size) and with diagnostic quality is challenging. This would be particularly useful in late gadolinium enhancement (LGE) imaging which is the reference standard among all existing imaging modalities for assessing the location and extent of myocardial fibrosis in various cardiac diseases such as myocardial infarction. However, in the clinical practice, 3D LGE imaging has a high in-plane (1.5 mm) but low slice resolution (5 to 10 mm). Combining multiple such volumes (with low slice resolution) acquired in different orientations using a super-resolution reconstruction framework can overcome this limitation.

Super-resolution (SR) reconstruction in MRI is now an established technique which has been successfully applied to diffusion-weighted imaging, functional MRI, myocardial scar assessment, cardiac cine MRI and fetal brain MRI. The following document describes super-resolution reconstruction in cardiac MRI: F. Odille, A. Bustin, B. Chen, P. Vuissoz, and J. Felblinger, "Motion-Corrected, Super-Resolution Reconstruction for High-Resolution 3D Cardiac Cine MRI," Med. Image Comput. Comput. Assist. Interv., vol. 9351, pp. 435-442, 2015.

Another method of super-resolution reconstruction in MRI is disclosed by the following document: Alaa A. Hefnawy, "An efficient super-resolution approach for obtaining isotropic 3-D imaging using 2-D multi-slice MRI", Egyptian Informatics Journal, vol. 14, p. 117-123, 2013.

Super-resolution techniques can be classified into two main categories: geometrical methods and statistical methods. Geometrical SR methods (also called multi-frame SR methods) make use of the physical coordinates of the acquired low-resolution (LR) data samples. These coordinates are varied between the multiple acquired datasets either by changing the volume orientation or by introducing a known shift (below the slice resolution) in the slice direction. These coordinates are integrated to the forward model of the acquisition system and the isotropic volume $x$ is found by regularized inversion. Statistical SR techniques (also called single-frame SR methods) aim at reconstructing a high-resolution (HR) image from a single acquired LR image using prior knowledge about the structure of the data, which can be obtained from the data themselves or from an external database, e.g. by machine learning approaches. Such methods exploit redundancies in the image, e.g. relations between neighboring pixels, to estimate the missing data from the acquired data. Initially, such methods were built on the assumption that images were locally smooth or sparse in some transformed domain. Recent research has been focused on the use of non-local similarity in the images. Such techniques have been the subject of extensive work and applications, particularly in the area of dictionary learning. Following document deals with dictionary learning:
K. K. Bhatia, A. N. Price, W. Shi, J. V Hajnal, and D. Rueckert, "Super-Resolution Reconstruction of Cardiac MRI Using Coupled Dictionary Learning," pp. 947-950, 2014.

By using a learned database, patches in a LR image can be compared to external similar data, which may thus enforce sparsity within the similar-patches group and therefore overcome the shortcomings of local methods such as total variation (TV), i.e. over-smoothing in flat areas and staircasing. Although such techniques have shown great potential in MR reconstruction, dictionary learning is a large-scale and highly non-convex problem, which often requires high computational complexity and extensive prior training.

Other than time complexity, similar patches are considered independently in the learning process, thus ignoring the relationships between similar patches within the image itself.

Self-similarity using the well-known non-local means filter has recently been proposed for single-frame SR, where similar patches are extracted in a local neighborhood within an iterative framework. Following documents describe such a filter:

P. Coupé, "Collaborative patch-based super-resolution for diffusion-weighted images," Neuroimage, vol. 83, pp. 245-261, 2013;
and
J. V. Manjón, P. Coupé, A. Buades, D. L. Collins, and M. Robles, "MRI superresolution using self-similarity and image priors," Int. J. Biomed. Imaging, vol. 2010, 2010.

Those techniques are applicable on single-frame SR.

The prior art patent publication US2015/0287223 A1 further discloses using the Augmented Lagrangian function for reconstruction and denoising of medical images.

An object of the present invention is to produce an isotropic 3D image with high resolution allowing for example to recover sharp edges and thin anatomical structures.

It is a further object of the invention to reduce the computational time for performing a super-resolution reconstruction.

It is a further object of the invention to propose a robust 3D SR image reconstruction with high-SNR efficiency.

At least one of the above-mentioned objects is achieved with a method according to the present invention for producing an isotropic 3D image, said method comprising steps of :

a) acquisition of at least two anisotropic 3D images or anisotropic 2D multislice images of an object,
b) determining an isotropic 3D image estimate from said at least two anisotropic 3D images,
c) applying a denoising technique and a 3D super-resolution reconstruction algorithm, both combined in a constrained optimization problem which can be solved by an Augmented Lagrangian algorithm, by realizing following steps:
d) defining 3D patches in the isotropic 3D image estimate, at iteration i=0, this estimate being obtained from step b), at iteration i+1 this estimate being obtained from step f),
e) applying a denoising technique on said 3D patches in order to obtain denoised 3D patches,
f) applying a geometrical 3D super-resolution reconstruction based on the denoised 3D patches used as a prior to produce the 3D isotropic image; the geometrical 3D super-resolution reconstruction including estimates of an Augmented Lagrangian algorithm,
g) updating the Augmented Lagrangian estimates,
h) iterating steps d-h until estimates meet a stopping criteria.

The invention may be performed by an image data processor.

The present invention is not limited to a simple juxtaposition of two known techniques, namely a denoising method and a super-resolution reconstruction method. On the contrary, the present invention proposes a clever combination of a denoising method with a super-resolution reconstruction method. The solution provided modifies both the processing of the denoising method and the processing of the super-resolution reconstruction method. To do this, it was necessary to reformulate the two problems of super-resolution and denoising in a non-obvious way by combining them into a single "non-convex" optimization problem. Then, the inventors cleverly expressed this problem in an equivalent form of multi-constraint optimization problem. Finally, the so-called Augmented Lagrangian method has been advantageously applied to solve this problem by impacting both the denoising method and the super-resolution method.

In other words, the present invention concerns a novel technique that combines geometrical and statistical super-resolution using a 3D self-similarity learning framework. In particular, the method of the invention is based on extraction and integration of self-similarity into a geometrical SR framework. The present invention allows following advantages: (i) merge information from multiple 3D anisotropic volumes acquired in different orientations into one single isotropic volume and (ii) recovering of sharp edges and thin anatomical structures using the self-similarity prior, which is hypothesized to be more robust in the presence of high noise levels and artifacts. These two advantages are formulated as an optimization problem comprising a geometrical SR data consistency term and a low-complexity 3D patch-based regularization. The two corresponding sub-problems are solved iteratively into a simple but effective augmented Lagrangian (AL) scheme.

For example, when applied to a high resolution isotropic phantom image acquired on a 3T system and retrospectively undersampled with different slice thickness (3, 5, 7 and 9 mm) and a noise level $\sigma$=5%, the 3D patch-based reconstruction according to the invention is able to minimize artifacts, to reduce the noise and to reveal fine details and structures, even for large slice thicknesses (for example 9 mm), without exhibiting staircasing artefacts on flat areas.

The improved performance on for example MR images can be explained by the fact that MR images contain a rich amount of non-local correlated structures and therefore high sparsity degree can be achieved by merging this information.

According to the invention, the Augmented Lagrangian algorithm may be based on alternating direction method of multipliers. This embodiment involves a synergy between the denoising step and the reconstruction step.

In particular, the geometrical 3D super-resolution reconstruction according to the invention may comprise the use of a gradient descent optimization method.

According to another object of the invention, the geometrical 3D super-resolution reconstruction may comprise the use of a conjugate gradient method.

According to further another object of the invention, the geometrical 3D super-resolution reconstruction may comprise the use of a generalized minimal residual method (GMRES).

According to a preferred embodiment of the invention, the denoising technique comprises multithreading of 3D patches processing.

Such an embodiment allows acceleration of the reconstruction using multithreading and/or overlapping, reducing the computational time without significantly compromising image quality. A multiprocessor system may be used to process the patches in parallel. Additionally, higher acceleration factors could be obtained using an implementation of the patch optimization on a graphic processing unit (GPU).

The method according to the invention also has a good property of quickly converging to a solution. The Augmented Lagrangian algorithm, according to the invention, guarantees good convergence regardless of the initialization chosen, for example zero initialization, or from a combination of the acquired anisotropic volumes, or first super-resolution reconstruction using a prior art super reconstruction technique. According to a preferred embodiment of the invention, the isotropic 3D image estimate is determined by averaging the acquired anisotropic images.

Advantageously, the denoising technique may be based on a transform-truncate-invert scheme comprising following steps for each considered patch:

- constructing a dictionary of similar patches by searching in a window surrounding the considered patch;
- transformation of similar patches and considered patch into a base making it possible to exploit the similarity of the considered patch with the dictionary;
- truncation or thresholding of coefficients describing the considered patch in the transformed base, in order to keep only the most significant coefficients; and
- inverse transformation of the considered patch to form the denoised patch.

In particular, the dictionary may be composed of 2D matrix or a table of N dimensions, with N greater than or equal to 3, of patches.

The most similar patches can be selected according to particular criteria such as the L2 norm of the difference of the patches, the L1 norm, the correlation coefficient, the mutual information, etc ...

In particular, the transformation may comprise a SVD decomposition, a HOSVD decomposition, a tensor-SVD decomposition or a wavelet transform.

During acquisition, object such as organs may be moving, the anisotropic 3D images may require a method of management and/or correction of movements (such as respiratory or cardiac). This step is optional in the case where the organs are immobile, but can be applied in case of geometric distortions due to imperfections of the MRI hardware. The movement correction algorithm may be applied as pre-processing before the application of isotropic 3D reconstruction by patches.

According to an embodiment of the invention, the acquisition step is followed by an image registration algorithm in order to compensate for the object motion.

The image registration algorithm may for example be applied on N volumes acquired during successive N apneas in order to compensate for the movement from volume to volume.

According to an advantageously variant embodiment of the invention, the acquisition step may be followed by a GRICS technique in order to compensate for the object motion. The GRICS technique may be used when N volumes are acquired in free breathing.

According to an advantageously variant embodiment of the invention, when multislice images are acquired, the acquisition step may be followed by an image registration algorithm and/or a slice to volume registration in order to compensate for the object motion. This correction may be applied when N volumes are acquired by means of N 2D multi-slice acquisitions, each multi-slice 2D stack comprising several successive apneas to acquire all the slices.

According to the invention, the acquisition step may comprise the acquisition of three anisotropic 3d images from arbitrary volume orientations.

As a variant, the acquisition step may comprise the acquisition of three anisotropic 3d images from axial, sagittal and coronal planes.

The choice of some parameters may be made to find a good compromise between denoising performance (signal-to-noise ratio, sharpness of images) and calculation time.

Advantageously, a size $n$ ($n$ x $n$ x $n$) of each 3D patch may be chosen between 1 and 15, preferably greater than or equal to 2 (2x2x2), more preferably equal to 10 (10x10x10).

The size $n$ controls the degree of structural information within each patch. On one hand, a large value of $n$ would capture the most geometric information and leads to a higher level of denoising, while a smaller value of $n$ would act as a local filter and would potentially reduce the denoising performance.

According to the invention, during the geometrical 3D super-resolution reconstruction step, an overlap parameter $p$ of patches may be chosen greater than 1, preferably equal to 4.

The good choice of overlap parameter $p$ allows for a gain in computational speed, which is crucial for some real-time imaging applications, and has to be chosen based on the expected computational speed and reconstruction quality.

According to another aspect of the invention, it is proposed a device for producing an isotropic 3D image, said device comprising a non-transitory, tangible computer-readable medium holding computer-executable instructions for performing a method comprising steps of :

a) considering at least two anisotropic 3D images or anisotropic 2D multislice images of an object,
b) determining an isotropic 3D image estimate from said at least two anisotropic 3D images,
c) applying a denoising technique and a 3D super-resolution reconstruction algorithm, both combined in a constrained optimization problem which can be solved by an Augmented Lagrangian algorithm, by realizing the following steps:
d) defining 3D patches in the isotropic 3D image estimate, at iteration i=0, this estimate being obtained from step b), at iteration i+1 this estimate being obtained from step f),
e) applying a denoising technique on said 3D patches in order to obtain denoised 3D patches,
f) applying a geometrical 3D super-resolution reconstruction based on the denoised 3D patches used as a prior to produce the 3D isotropic image; the geometrical 3D super-resolution reconstruction including estimates of an Augmented Lagrangian algorithm,
g) updating the Augmented Lagrangian estimates,
h) iterating steps d-h until estimates meet a stopping criteria.

According to another aspect of the invention, it is proposed a system for producing an isotropic 3D image, the system comprising:

an imaging device configured to (a) acquire at least two anisotropic 3D images or anisotropic 2D multislice images of an object;
an image data processor configured to:

b) determining an isotropic 3D image estimate from said at least two anisotropic 3D images,
c) applying a denoising technique and a 3D super-resolution reconstruction algorithm, both combined in a constrained optimization problem which can be solved by an Augmented Lagrangian algorithm, by realizing following steps:
d) defining 3D patches in the isotropic 3D image estimate, at iteration i=0, this estimate being obtained from step b), at iteration i+1 this estimate being obtained from step f),
e) applying a denoising technique on said 3D patches in order to obtain denoised 3D patches,
f) applying a geometrical 3D super-resolution reconstruction based on the denoised 3D patches used as a prior to produce the 3D isotropic image; the geometrical 3D super-resolution reconstruction including estimates of an Augmented Lagrangian algorithm,
g) updating the Augmented Lagrangian estimates,
h) iterating steps d-h until estimates meet a stopping criteria.

Preferably, the system comprises several processors to perform the denoising technique by multithreading the 3D patches processing.

For the purpose of illustrating the invention, there is shown in the drawings a form that is presently preferred; it is being understood, however, that this invention is not limited to the precise arrangements and instrumentalities.

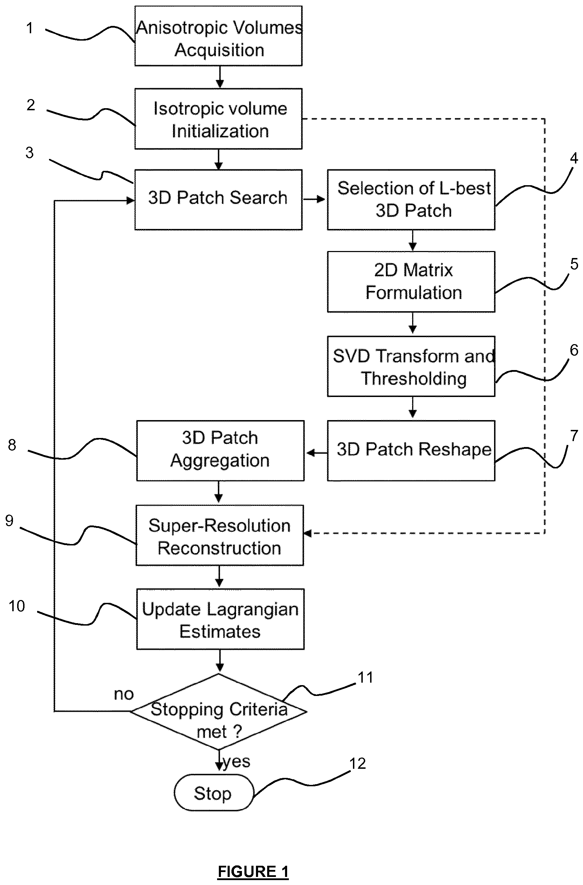

- Figure 1 is a schematic flowchart illustrating the isotropic 3D reconstruction according to the invention;

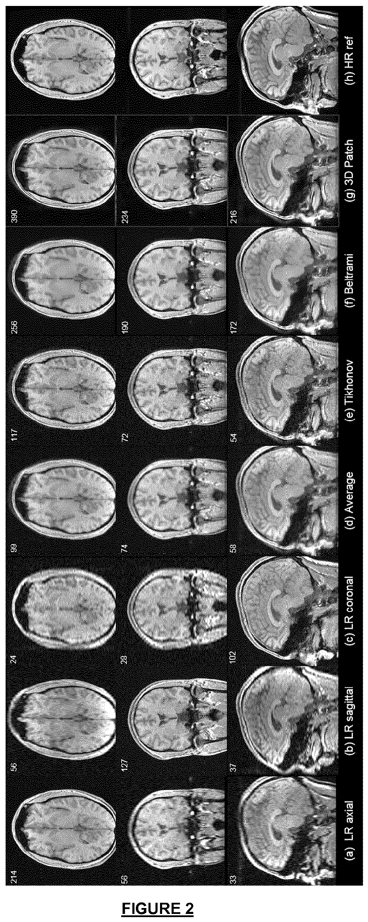

- Figure 2 is a view of a set of images illustrating a visual quality comparison of isotropic reconstruction according to the invention on Brain image ($0.88 \times 0.88 \times 0.88$ mm$^3$) with respect to the previous state-of-the-art techniques Beltrami and Tikhonov algorithms;

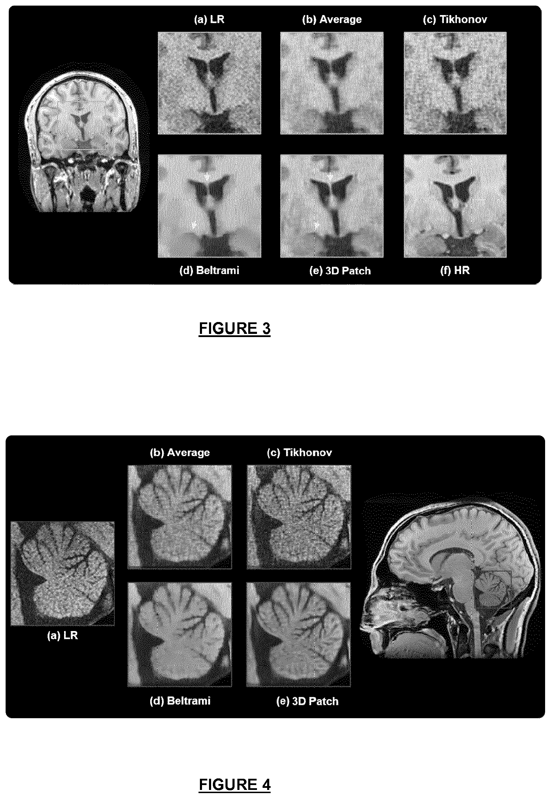

- Figure 3 is a view of a set of images illustrating a visual comparison of the isotropic 3D Patch reconstruction (e) according to the invention of a Brain ventricle ($0.88 \times 0.88 \times 0.88$ mm$^3$) from low resolution acquisitions (a) LR ($0.88 \times 0.88 \times 4$ mm$^3$) with respect to an Averaging (b), Tikhonov (c) and Beltrami (d) algorithms;
- Figure 4 is a view of a set of images illustrating a visual comparison of the isotropic 3D Patch reconstruction (e) according to the invention of the Brain cerebellum ($0.5 \times 0.5 \times 0.5$ mm$^3$) from LR acquisitions (a) ($0.5 \times 0.5 \times 2$ mm$^3$) with respect to an Averaging (b), Tikhonov (c) and Beltrami (d).

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

Hereinafter, the present invention will be described in detail by explaining exemplary embodiments of the invention with reference to the attached drawings.

Embodiments herein include computer-implemented methods, tangible non-transitory computer-readable mediums, and systems. The computer-implemented methods may be executed, for example, by a processor that receives instructions from a non-transitory computer-readable storage medium. Similarly, a system described herein may include at least one processor and memory, and the memory may be a non-transitory computer-readable storage medium. As used herein, a non-transitory computer-readable storage medium refers to any type of physical memory on which information or data readable by a processor may be stored. Examples include random access memory (RAM), read-only memory (ROM), volatile memory, nonvolatile memory, hard drives, CD ROMs, DVDs, flash drives, disks, and any other known physical storage medium. Singular terms, such as "memory" and "computer-readable storage medium," may additionally refer to multiple structures, such a plurality of memories and/or computer-readable storage mediums. As referred to herein, a "memory" may comprise any type of computer-readable storage medium unless otherwise specified. A computer-readable storage medium may store instructions for execution by a processor, including instructions for causing the processor to perform steps or stages consistent with an embodiment herein. Additionally, one or more computer-readable storage mediums may be utilized in implementing a computer-implemented method. The term "computer-readable storage medium" should be understood to include tangible items and exclude carrier waves and transient signals.

Figure 1 illustrates different stages of an algorithm for the processing a reconstruction according to the invention. Figure 1 shows a first stage 1 of anisotropic volumes (3D images) acquisition. Stage 2 concerns the low resolution isotropic volume initialization by averaging the acquired anisotropic volumes.

At the stage 3, a 3D patch search is performed to extract 3D block from the low resolution isotropic volume, and for each patch searching neighbor patches. A selection of L-best 3D patches is realized at the stage 4 with a self-similarity block-grouping in a 2D matrix formulation at stage 5. Then a low-rank method for denoising is performed at the stage 6 with a SVD transform and threshold.

The stage 7 concerns the 3D reshape before a 3D aggregation stage 8.

The resulting matrix is used as a prior in a 3D super-resolution reconstruction stage 9 taking into account the low resolution isotropic volume of the stage 2. An augmented Lagrangian scheme is used to merge the denoising stage and the isotropic reconstruction.

The Lagrangian estimates are then updated at the stage 10. A checking is performed at the stage 11: if the estimates meet a predetermined stopping criterion, the procedure stops at the stage 12 and the isotropic 3D image is delivered. If the estimates do not meet the predetermined stopping criterion, the isotropic volume is iteratively reconstructed from stage 3 to account for the residual noise which propagates during the patch-grouping process. In general, a small number of iterations (for example between 4 and 6 in some experiments) is enough to get an accurate reconstruction and avoid useless computations.

The super-resolution method is called geometric because it uses the coordinates and dimensions of each voxel of the acquired anisotropic images. This geometric information is extracted from images in DICOM format, images or MRI raw data obtained in the manufacturer's format, or images converted into any other format containing this information (NIFTI, Analyze, etc.).

The super-resolution method uses a mathematical description of the acquisition system as described in equation (1) here below, i.e. involving a spatial transformation operator (rotation or translation) and operators modeling the slice selection and the sub-sampling.

The super-resolution method may be applied to three particular orientation schemes: (i) three strictly orthogonal volumes (axial, sagittal and coronal orientations); (ii) N identical orientation volumes but translated in one of the directions (example: three volumes of axial orientation of 1x1x3 mm3, translated by 0, 1 and 2 mm respectively in the head-to-foot direction); (iii) N volumes of independent orientations, such as the usual plans used in cardiac MRI (short-axis (SAX), long-axis horizontal (HLAX), vertical long-axis (VLAX), left ventricular outflow tract (LVOT), etc ...).

Here below will be described components to implement the method according to the invention.

A geometrical Super-Resolution technique may be described as follows.

Given Z derived anisotropic measurements $\rho_1,...,\rho_Z$ (Z = 3 in this study), representing the same object in arbitrary directions, affected by noise $\sigma$, and given the corresponding system matrices of the form $E_i = S_i B_i T_i$ ($i \in \{1...Z\}$), the isotropic volume $x$ is found by solving the following regularized least squares optimization problem

$$\min_x \sum_{i=1}^{Z} \|S_i B_i T_i x - \rho_i\|^2 + \lambda R(x) \tag{1}$$

Here $T_i$ is a rigid image transformation that takes the SR image from the desired reconstructed orientation to the orientation of the ith acquisition (i.e. it is an interpolation operator that can describe an arbitrary orientation); $S_iB_i$ is a slice selection operator including a blurring operator $B_i$ (i.e. a sum in the slice direction in the range of the slice thickness) and a downsampling operator $S_i$ (in the slice direction). Here R is the chosen regularization function and $\lambda$ is the corresponding nonnegative regularization parameter. The least squares term in equation (2) here below forces the reconstructed isotropic volume $x$ to preserve a degree of fidelity with respect to the acquired LR data, whereas the regularization term discourages aberrant values from appearing in the reconstructed volume. Previously studied regularization schemes include: Tikhonov, typically defined by $R_{TK}(x) = \|x\|^2$ or $R_{H1}(x) = \|\nabla x\|^2$; edge-preserving regularizers such as total variation (TV) regularization where $R_{TV}(x) = \|\nabla x\|$ or Beltrami, defined as $R_{BEL}(x) = \sqrt{1 + \beta^2 |\nabla x|^2}$, which offers a compromise between the smooth regularization of H[1] priors and the feature preservation of TV regularization.

*Dictionary Learning*

The general formulation of sparse and redundant representation considers a 3D signal $x$ using the dictionary $D$ and sparse vector $\alpha$ as the approximation $x \approx D\alpha$, satisfying $\|\alpha\|_0 \leq R$, where $R$ is a predefined threshold and the $l_0$-norm counts the number of nonzero elements in $\alpha$. In other words, the signal $x$ can be represented with a minimum number of coefficients $\alpha$ in the dictionary $D$. With sparsity prior and using the formulation (1), a volume $x$ over dictionary D can be estimated by solving the $l_0$ minimization given as

$$\underset{\alpha}{\arg\min} \sum_{i=1}^{z} \frac{1}{2} \|D\alpha - \rho_i\|^2 + \lambda \|\alpha\|_0 \tag{2}$$

In equation (2) the first term is known as the relation to measurements, and the other term represents the "prior knowledge" to the solution. The regularization parameter $\lambda$ imposes the degree of closeness of the prior knowledge to the data. In existing SR models with sparsity prior, D is usually built from external HR trained dataset, making the assumption that a HR patch and its corresponding LR patches have the same sparse decomposition in their respective dictionaries, also called "correlated dictionary". While being powerful, such techniques require high computational complexity as well as a rich dictionary to enable sparse patch approximations, and often ignore the relationships between patches, considering the reconstruction of each patch independently.

According to the present invention, a novel 3D isotropic reconstruction algorithm is proposed, which exploits the redundancy of non-local 3D patches, in the acquired data itself, to build the dictionary D. The isotropic reconstruction problem is seen as a joint low-rank and SR optimization, which is efficiently solved through simpler sub-problems using a variable splitting described hereafter.

A 3D Patch Representation according to the invention may be described as follows.

First, the 3D patch representation is defined. According to the invention an unknown volume $x$ of size $N = N_x \times N_y \times N_z$ is combined. A patch $P_k^x$, in the volume x, is defined as a small 3D block of size $n^3$ pixels around the pixel at indexes $k$. We define the operator $R_k : x \in \mathbb{R}^{N_x \times N_y \times N_z} \mapsto R_k(x) = P_k^x \in \mathbb{R}^{n^3}$ that extracts a 3D block from the volume $x$ and its adjoint $R_k^T$ such that $R_k^T P_k^x$ places back the patches at the original positions in x. Then, for a specific reference patch $P_k^x$, a search for all similar patches $P_{\bar{k}}^x$ is performed in a large neighborhood $H$ of size $d^3$ ($d>n$), with $\bar{k} \in \left\{k - \frac{d}{2}, ..., k + \frac{d}{2}\right\}^3$. From the set of $(d - n + 1)^3$ 3D overlapped patches in $H$, the L-most similar patches to the reference patch $P_k^x$ are chosen. The similarity is measured by the $l_2$-norm distance defined as $d\left(P_{\bar{k}}^x, P_k^x\right) = \left\|P_{\bar{k}}^x - P_k^x\right\|_2$ and the $L - 1$ patches $P_{k_l}^x$, $l = 1, ..., L - 1$, with the smallest distance are selected. This

EP 3 486 864 B1

selection, often called as block-matching, results in a sparse set of dimension *3D + L* with lots of non-local similarities and can be analyzed in a very efficient manner with transformations such as multi-dimension Haar wavelet to produce sparsity in the case of *2D + L* problems such as image denoising. Here we choose to simplify the problem into an easier one by reducing the dimensionality of the similarity matrix by concatenating each vectorized 3D patch (representing one single column) into a 2D matrix (see Fig. 1, sage 5). This process is applied to each pixel in the volume *x*, therefore resulting in *N* groups $x_k$ of size ($n^3 \times L$), with

$$x_k = \left[P_k^x, P_{k_1}^x, \dots, P_{k_{L-1}}^x\right] \text{ for } k \in \{1, \dots, N\} \tag{3}$$

The 2D matrix $x_k$ contains a high degree of non-local similarity and redundancy between intensity values and therefore exhibits a low-rank structure.

A technique for low-rank and adaptive basis selection is for example singular value decomposition (SVD). The SVD of the data matrix $x_k$ is a decomposition of the form

$$x_k = \sum_{j=1}^{L} \left(\sigma_{x_k}\right)_j \left(u_{x_k}\right)_j \left(v_{x_k}^T\right)_j = U_k S_k V_k^T \tag{4}$$

Where $U_k$ is an orthogonal matrix of size ($n^3 \times n^3$), $V_k$ is an orthogonal matrix of size ($L \times L$), with $U_k^T U_k = Id(n^3)$, $V_k^T V_k = Id(L)$ and $S_k$ is a diagonal matrix of size ($n^3 \times L$), with non-negative entries. Each element in dictionary $D_k$ for group $x_k$ is thus defined as $(d_k)_j = \left(u_{x_k}\right)_j \left(v_{x_k}^T\right)_j$, $j = 1,\dots,L$, and $(\sigma_{x_k})_j$ represents the sparse coefficients. Therefore, the element $(d_k)_j$ can be considered as an adaptive basis, and $(\sigma_{x_k})_j$ as the representation coefficient. The reconstructed group is then expressed by $x_k = D_k \alpha_k$ where $D_k$ is the concatenation of all $(d_k)_j$ and $\alpha_k$ the concatenation of all $(\sigma_{x_k})_j$. Therefore, the volume *x* can be sparsely represented by the set of sparse coefficients $\{\alpha_k\}$:

$$x = D\alpha = \frac{\sum_{k=1}^{N} R_k^T (D_k \alpha_k)}{\sum_{k=1}^{N} R_k^T (I_k)} \tag{5}$$

Where *D* denotes the concatenation of all $D_k$, $\alpha$ denotes the concatenation of all $\alpha_k$, and $I_k$ is a matrix of the same size as $D_k \alpha_k$ with all elements being 1 (i.e. averaging matrix), for k = 1,...,N.

In particular, the present invention proposes a Joint Denoising and SR Cost Functional.

Based on the observation that $\alpha_k$ is sparse when similar patches are grouped, we propose to reconstruct the MR volume by solving the following self-similarity SR problem in the group domain. Now, incorporating (5) into (1), the scheme according to the invention for volume super-resolution (SR) using 3D Patch redundancy and SVD based self-dictionary is formulated as

$$\underset{\alpha}{\text{argmin}} \sum_{i=1}^{Z} \frac{1}{2} \|ED\alpha - \rho_i\|_2^2 + \lambda \|\alpha\|_0 \tag{6}$$

By introducing a variable x, the equation (6) is transformed into an equivalent constrained form

$$\underset{x,\alpha}{\text{argmin}} \sum_{i=1}^{Z} \frac{1}{2} \|Ex - \rho_i\|_2^2 + \lambda \|\alpha\|_0 \ s.t. \ x = D\alpha \tag{7}$$

8

The problem (7) is difficult to solve directly due to the constrained form of the functional. In particular, the present invention is also remarkable by the fact that, to solve this minimization problem, the equation (7) is approximated by using its Augmented Lagrangian (AL) formulation. For a sake of simplicity and without loss of generality, $\rho$ is considered as a concatenation of the acquired low resolution (LR) volumes $(\rho)_i, i = 1,...,Z$ and rewrite the problem (7) in its Lagrangian form as

$$\mathcal{L}(x,\alpha) = \frac{1}{2}\|Ex - \rho\|_2^2 + \lambda\|\alpha\|_0 + \frac{\mu}{2}\|x - D\alpha - b\|_2^2 \tag{8}$$

Where E represents the acquisition model, D is the self-similarity dictionary and $\alpha$ the sparse coefficients. The parameter $b$ denotes the AL multiplier of the original problem (7). The idea is now to solve the joint minimization problem efficiently through simpler sub-optimization problems by using a variable splitting. In the present invention, it consists in splitting the isotropic reconstruction term (minimization with regards to x) and the regularization term (minimization with regards to the sparse coefficients $\alpha$).

In particular, an optimization according to the invention may be applied as follows.

The augmented equation (8) is solved by alternating the optimization between the isotropic volume $x$ and the sparse coefficients $\alpha$, followed by an update of the augmented multiplier $b$.

*Optimization 1: 3D Patch Based Denoising Update*

The first sub-problem with regards to the variable $\alpha$ is

$$\mathcal{L}_1(\alpha): \quad \underset{\alpha}{\text{argmin}}\frac{1}{2}\|x - D\alpha - b\|_2^2 + \lambda\|\alpha\|_0 \tag{9}$$

It is obvious to see that (9) can be efficiently minimized by solving N sub-problems for all the groups. Each group-based sub-problem is thus formulated as

$$\underset{\alpha_k}{\text{argmin}}\frac{1}{2}\|x_k - b_k - D_k\alpha_k\|_2^2 + \lambda\|\alpha_k\|_0 \tag{10}$$

$$for \; k = 1,...,N$$

Setting $\tilde{x}_k = x_k - b_k = D_k\tilde{\alpha}_k$, where $\tilde{\alpha}_k$ represents the concatenation of the singular values of $\tilde{x}_k$, and using the unitary property of the SVD:

$$(d_k)_j^T(d_k)_j = (v_{\alpha_k})_j(u_{\alpha_k}^T)_j(u_{\alpha_k})_j(v_{\alpha_k}^T)_j = (I_{\alpha_k})_j \tag{11}$$

and by deduction:

$$\|\tilde{x}_k - D_k\alpha_k\|_2^2 = \|D_k\tilde{\alpha}_k - D_k\alpha_k\|_2^2 = \|\tilde{\alpha}_k - \alpha_k\|_2^2 \tag{12}$$

Equation (9) is thus equivalent to the following equation

$$\mathcal{L}_1^k(\alpha): \quad \alpha_k^* = \underset{\alpha_k}{\text{argmin}}\frac{1}{2}\|\tilde{\alpha}_k - \alpha_k\|_2^2 + \lambda\|\alpha_k\|_0 \tag{13}$$

Where the $l_0$ norm counts the number of non-zeros elements in $\alpha_k$, and $\lambda > 0$ controls the strength of sparseness. The lower the parameter $\lambda$ is, the more accurate the solution is, at the price of reducing the sparseness. The solution of (13) has a well-known closed form, and the optimum is obtained as

$$\alpha_k^* = H_{\sqrt{2\lambda}}(\tilde{\alpha}_k) \tag{14}$$

Where $H_\theta(.)$ is the element-wise hard thresholding operator, defined for a scalar $v$ as: $H_\theta(v) = \theta.1_{|v|>\theta}$. In other words, any singular value below $\sqrt{2\lambda}$ is set to 0. Note that only the singular values are modified, but the singular vectors are unperturbed. The value $\alpha^*_k$ is indirectly an estimate of the noise $x_k - b_k$, and thus the hard-thresholding step effectively shrinks the noise, i.e. small differences are accounted as features, and only large impulses are considered as noise.

*Optimization 2: Super-Resolution Update*

The second sub-problem with regards to the variable $x$ is

$$\mathcal{L}_2(x): \quad \underset{x}{\text{argmin}}\,\frac{1}{2}\|Ex - \rho\|_2^2 + \frac{\mu}{2}\|x - D\alpha - b\|_2^2 \qquad (15)$$

Differentiating with respect to x, we find that the residual gradient step is

$$d = E^T E x - E^T \rho + \mu(x - D\alpha - b) \qquad (16)$$

Where the subscript T denotes the transposed conjugate. We use the gradient descent optimization method to iteratively update the reconstructed volume x:

$$x^* \leftarrow x - \beta d \qquad (17)$$

Where the relaxation parameter $\beta$ can be updated iteratively or be set to a specific value (e.g. $\beta = 0.1$) to ensure convergence.
Notice that this optimization step requires only one multiplication of $E^T\rho$, which can be determined during the initialization step, and only one multiplication $E^T Ex$ per iteration. In (16), $D\alpha$ represents a truncated SVD reconstruction where only the singular values above a specified threshold are included, leading to an estimated low-rank matrix. The Lagrangian parameter is then updated at iteration t + 1 as

$$b^{(t+1)} \leftarrow b^{(t)} + r\left(D\alpha^{(t+1)} - x^{(t+1)}\right) \qquad (18)$$

which only involves an additional straightforward computation. The addition of a new variable $b$ can be interpreted as iteratively "adding back the residual noise". The accuracy of the patch grouping is highly affected by the noise in the volume $x^{(t)}$ at iteration t and can results in noise residual in the reconstructed volume $x^{(t+1)}$ at iteration t + 1. Therefore, optimization (13) and (15) are processed iteratively to improve the accuracy of the reconstructed volume. A full algorithm according to the invention may be summarized in Algorithm 1 a s follows:

## ALGORITHM I
### 3D ISOTROPIC MRI RECONSTRUCTION USING JOINT DENOISING AND SUPER-RESOLUTION OPTIMIZATION

1    **Input:** $\rho, \mu, \lambda, L,$ outer loop, $iter,$ operator $E$

2    **Initialization:** $x^{(0)} = E^T(\rho);\ \ b^{(0)} = 0;\ \ \beta = 0.1;$

3    **for** $t = 0, \dots, iter$ **do**

4        $r^{(t)} = x^{(t)} - b^{(t)}$

5        **for** $k = 1, \dots, N$ **do** *% Solve $\mathcal{L}_1^k$*        Multi-threading

6        $r_k^{(t)} = \left[ P_k r^{(t)}, P_{s_1} r^{(t)}, \dots, P_{s_{L-1}} r^{(t)} \right]$        3D Denoising step

7        $\left[ U_k^{(t)}, S_k^{(t)}, V_k^{(t)} \right] = svd\left( r_k^{(t)} \right)$        **Output** : w

8        $\omega_k^{(t+1)} = U_k^{(t)} H_{\sqrt{2\lambda}}\left( S_k^{(t)} \right) V^{T}{}_k^{(t)}$

9        **end for**

10        $\omega^{(t+1)} = \dfrac{\sum_{k=1}^N R_k^T\left( \omega_k^{(t+1)} \right)}{\sum_{k=1}^N R_k^T(I_k)}$

11        $\tilde{x}_0^{(t)} = x^{(t)}$        Super-Resolution

12        **while** *Not Converged* **do** *% Solve $\mathcal{L}_2$*        **Output** : x

13        $d^{(i)} = E^T E\left( \tilde{x}_i^{(t)} \right) - x^{(0)} + \mu\left( \tilde{x}_i^{(t)} - \omega^{(t+1)} - b^{(t)} \right)$

14        $\tilde{x}_{i+1}^{(t)} = \tilde{x}_i^{(t)} - \beta d^{(i)}$

15        **end while**

16        $x^{(t+1)} = \tilde{x}^{(t)}$

17        $b^{(t+1)} = b^{(t)} + \left( \omega^{(t+1)} + x^{(t+1)} \right)$        Lagrangian Update: linking x and w

18    **end for**

19    **Output:** the isotropic 3D volume $x$

Now will be described an example of implementation.

Reconstructions and evaluations were performed in Matlab (The MathWorks, Natick, MA) on a 32-core 3.2 GHz Intel Xeon E5-2667 v3 PC with 64 GB of RAM. The 3D patch grouping and singular value thresholding steps of the proposed method (stage 4-7 on Fig. 1) were implemented in C to reduce the computational time.

Isotropic reconstruction from arbitrary volume orientations (i.e. with non-strictly orthogonal views) requires an accurate knowledge of patient position and system imaging configuration to avoid any alignment errors. This information was extracted from the images' DICOM file headers as recorded by the imaging system, including Spacing Between Slices, Image Orientation Patient (IOP) and Image Position Patient (IPP), and was used to construct the operator E. Patient motion for the cardiac MRI scans was handled by rigid registration.

One of the key advantages of the proposed technique is the possibility of multithreading implementations for algorithm speedup. As seen above, the low-rank optimization is applied on each group $x_k$ independently and therefore, multi-threading can efficiently and easily be implemented for the patch search and hard-thresholding step. The 3D volume was divided into 32 sub-volumes, each of them being treated separately by one processor, thus dividing the processing time by a factor of 32. Besides the multithreading computing, patches overlapping can also be performed as a means of acceleration. Indeed, one can use a step d in the three dimensions and therefore perform the patch matching step from one reference patch $P_k^x$ to the next $P_{k+p}^x$ (located at a distance $p$ pixels from the previous reference patch). In such a context, a step of $p = 4$ would theoretically divide the processing time by $4^3 = 64$, which is not negligible for large volumes. However, a large overlap step $p$ would decrease the SNR and a tradeoff between acceleration and image quality / accuracy must be defined.

The right values for the different parameters in the algorithm may be chosen as follows. The size of patch $n$ is preferably greater than or equal to 2 (default value: $10 \times 10 \times 10$). The size $d$ of the search neighborhood window is chosen between 1 and 8, preferably 4. The number L of selected 3D patches is greater than 10, preferably 20. The L most similar 3D patches are determined by applying a similarity threshold which is less or equal to 5, preferably equal to 1. The overlap parameter p of patches is chosen greater than 1, preferably equal to 4. The overlap parameter p allows for a gain in computational speed, which is crucial for some real-time imaging applications, and has to be chosen based on the expected computational speed and reconstruction quality. The number of iterations is more than 2, preferably 4.

Now will be described results from experiments on healthy person for brain imaging.

Figure 2 shows the visual and sharpness results of the healthy brain study. From top to bottom: axial, coronal and sagittal views. The sub-figures (a-c) are the three native acquisitions; sub-figures (d-f) are the reconstruction results by the averaging, Tikhonov and Beltrami methods, respectively; (g) is the proposed 3D patch-based reconstruction according to the invention and (h) is the HR reference. The proposed reconstruction results in better visual image quality, recovers more details and enhances edges, while reducing the noise down to an acceptable level. Overall, the Sharpness Index (SI) shows good results with the proposed reconstruction according to the invention and correlates well with the visual human perception. Compared to Beltrami regularization, the proposed reconstruction technique improves the sharpness of the reconstructed volume by over 152 % for the axial view (123 % and 126 % for sagittal and coronal views, respectively). Figure 3 depicts the zoomed-in and cropped isotropic reconstructions on the brain ventricle by the different methods. Although Tikhonov is able to reconstruct a HR volume while reducing the blur observed in the averaged reconstruction, it fails to remove the noise of the acquired images and exhibits residual artifacts. On the other hand, Beltrami regularization is able to reduce the noise, at the cost of producing staircasing effects, often associated with $l_1$-minimization problems, mainly due to the high level of noise. By exploiting the non-local similarities and geometries of the 3D volume, the proposed method clearly outperforms Tikhonov and Beltrami regularizations not only on flat areas (e.g. white matter) by removing the staircasing effect, but also on textured areas, with well-preserved structures, edges and image sharpness (e.g. brain ventricle). The results shown in Figure 4 for the brain cerebellum reconstruction are consistent with the simulation study, the patch-based reconstruction eliminates artifacts and suppresses a large amount of noise and possible local intensity variations, while preserving the main features and especially the small details (e.g. cerebellum sulcus).

The method according to the present invention for isotropic 3D reconstruction of MR images is based on a joint denoising and SR framework. The proposed method integrates non-local self-similarities information, by grouping 3D patches with similar structures, into a geometrical SR framework. Low-rank properties and sparsity of the group are enforced to reduce the noise of the reconstructed volume while the SR is used to recover an isotropic 3D volume. An augmented Lagrangian formulation is used to efficiently decompose the main cost function into two sub-problems that have straightforward solutions. Experimental results on simulation, brain imaging and clinical cardiac imaging indicate that the proposed technique outperforms classic state-of-the-art SR methods, including local-based regularizations, and can achieve higher SNR and image sharpness at any given noise level.

Numerous variations and modifications will become apparent to those skilled in the art once the above disclosure is fully appreciated. The scope of the invention is defined solely by the appended claims.

## Claims

1. Method for producing an isotropic 3D image, said method comprising steps of :

    a) acquisition of at least two anisotropic 3D images or anisotropic 2D multislice images of an object,
    b) determining an isotropic 3D image estimate from said at least two anisotropic 3D images,
    c) applying a denoising technique and a 3D super-resolution reconstruction algorithm, both combined in a constrained optimization problem which is soluble by an Augmented Lagrangian algorithm, by realizing following steps:

d) defining 3D patches in the isotropic 3D image estimate, at iteration i=0, this estimate being obtained from step b), at iteration i+1 this estimate being obtained from step f),
e) applying a denoising technique on said 3D patches in order to obtain denoised 3D patches,
f) applying a geometrical 3D super-resolution reconstruction based on the denoised 3D patches used as a prior to produce the 3D isotropic image; the geometrical 3D super-resolution reconstruction including estimates of an Augmented Lagrangian algorithm,
g) updating the Augmented Lagrangian estimates,
h) iterating steps d-h until estimates meet a stopping criteria.

2. Method according to claim 1, **characterized in that** the Augmented Lagrangian algorithm is based on alternating direction method of multipliers.

3. Method according to claim 1 or 2, **characterized in that** the geometrical 3D super-resolution reconstruction comprises the use of a gradient descent optimization method.

4. Method according to claim 1 or 2, **characterized in that** the geometrical 3D super-resolution reconstruction comprises the use of a conjugate gradient method.

5. Method according to claim 1 or 2, **characterized in that** the geometrical 3D super-resolution reconstruction comprises the use of a generalized minimal residual method (GMRES).

6. Method according to any one of preceding claims, **characterized in that** the denoising technique comprises multithreading of 3D patches processing.

7. Method according to any one of preceding claims, **characterized in that** the isotropic 3D image estimate is determined by averaging the acquired anisotropic images.

8. Method according to any one of preceding claims, **characterized in that** the denoising technique is based on a transform-truncate-invert scheme comprising following steps for each considered patch:

- constructing a dictionary of similar patches by searching in a window surrounding the considered patch;
- transformation of similar patches and considered patch into a base making it possible to exploit the similarity of the considered patch with the dictionary;
- truncation or thresholding of coefficients describing the considered patch in the transformed base, in order to keep only the most significant coefficients; and
- inverse transformation of the considered patch to form the denoised patch.

9. Method according to claim 8, **characterized in that** the dictionary is composed of 2D matrix or a table of N dimensions, with N greater than or equal to 3, of patches.

10. Method according to claim 8, **characterized in that** the transformation comprises a SVD decomposition.

11. Method according to claim 8, **characterized in that** the transformation comprises a HOSVD decomposition, tensor-SVD decomposition or a wavelet transform.

12. Method according to any one of preceding claims, **characterized in that** the acquisition step is followed by an image registration algorithm in order to compensate for the object motion.

13. Method according to any one of claims 1-11, **characterized in that** the acquisition step is followed by a GRICS technique in order to compensate for the object motion.

14. Method according to any one of claims 1-11, **characterized in that** multislice images are acquired and the acquisition step is followed by an image registration algorithm and/or a slice to volume registration in order to compensate for the object motion.

15. Method according to any one of claims 1-13, **characterized in that** the acquisition step comprises the acquisition of three anisotropic 3d images from arbitrary volume orientations.

16. Method according to any one of claims 1-13, **characterized in that** the acquisition step comprises the acquisition of three anisotropic 3d images from axial, sagittal and coronal planes.

17. Method according to any one of preceding claims, **characterized in that** a size $n$ ($n$ x $n$ x $n$) of each 3D patch is chosen between 1 and 15, preferably greater than or equal to 2 (2x2x2), more preferably equal to 10 (10x10x10).

18. Method according to any one of preceding claims, **characterized in that** during the geometrical 3D super-resolution reconstruction step, an overlap parameter p of patches is chosen greater than 1, preferably equal to 4.

19. A device for producing an isotropic 3D image, said device comprising a non-transitory, tangible computer-readable medium holding computer-executable instructions for performing a method comprising steps of :

a) considering at least two anisotropic 3D images or anisotropic 2D multislice images of an object,
b) determining an isotropic 3D image estimate from said at least two anisotropic 3D images,
c) applying a denoising technique and a 3D super-resolution reconstruction algorithm, both combined in a constrained optimization problem which can be solved by an Augmented Lagrangian algorithm, by realizing following steps:
d) defining 3D patches in the isotropic 3D image estimate, at iteration i=0, this estimate being obtained from step b), at iteration i+1 this estimate being obtained from step f),
e) applying a denoising technique on said 3D patches in order to obtain denoised 3D patches,
f) applying a geometrical 3D super-resolution reconstruction based on the denoised 3D patches used as a prior to produce the 3D isotropic image; the geometrical 3D super-resolution reconstruction including estimates of an Augmented Lagrangian algorithm,
g) updating the Augmented Lagrangian estimates,
h) iterating steps d-h until estimates meet a stopping criteria.

20. A system for producing an isotropic 3D image, the system comprising:

an imaging device configured to (a) acquire at least two anisotropic 3D images or anisotropic 2D multislice images of an object;
an image data processor configured to:

b) determining an isotropic 3D image estimate from said at least two anisotropic 3D images,
c) applying a denoising technique and a 3D super-resolution reconstruction algorithm, both combined in a constrained optimization problem which can be solved by an Augmented Lagrangian algorithm, by realizing following steps:
d) defining 3D patches in the isotropic 3D image estimate, at iteration i=0, this estimate being obtained from step b), at iteration i+1 this estimate being obtained from step f),
e) applying a denoising technique on said 3D patches in order to obtain denoised 3D patches,
f) applying a geometrical 3D super-resolution reconstruction based on the denoised 3D patches used as a prior to produce the 3D isotropic image; the geometrical 3D super-resolution reconstruction including estimates of an Augmented Lagrangian algorithm,
g) updating the Augmented Lagrangian estimates,
h) iterating steps d-h until estimates meet a stopping criteria.

21. System according to claim 20, **characterized in that** it comprises several processors to perform the denoising technique by multithreading the 3D patches processing.

**Patentansprüche**

1. Verfahren zum Erzeugen eines isotropen 3D-Bildes, mit den Schritten:

a) Erhalten von zumindest zwei anisotropen 3D-Bildern oder anisotropen 2D-Mehrschichtbildern eines Objekts,
b) Ermitteln einer isotropen 3D-Bildabschätzung aus den zumindest zwei anisotropen 3D-Bildern,
c) Anwenden eines Rauschminderungsverfahrens und eines 3D-Hochauflösungs-Rekonstruktionsalgorithmus, beide verbunden in einem Optimierungsproblem mit Nebenbedingungen, welches mittels eines erweiterten Lagrange-Algorithmus lösbar ist, durch Ausführen der folgenden Schritte:

d) Definieren von 3D-Bereichen in der isotrope Bildabschätzung, wobei diese Abschätzung aus Schritt b) bei Iteration i=0 erhalten wird, und diese Ab-schätzung aus Schritt f) bei Iteration i+1 erhalten wird,

e) Anwenden eines Rauschminderungsverfahrens auf diese 3D-Bereiche, um rauschgeminderte 3D-Bereiche zu erhalten,

f) Anwenden einer geometrischen 3D-Hochauflösungs-Rekonstruktion auf Basis der rauschgeminderten 3D-Bereiche, die als Vorläufer zum Erstellen des isotropen 3D-Bildes verwendet werden; wobei die geometrische 3D-Hochauflösungs-Rekonstruktion die Abschätzungen eines erweiterten Lagrange-Algorithmus beinhaltet,

g) Aktualisieren der erweiterten Lagrange-Abschätzungen,

h) Wiederholen der Schritte d-h bis die Abschätzungen ein Stopp-Kriterium erfüllen.

2. Verfahren nach Anspruch 1, **dadurch gekennzeichnet, dass** der erweiterte Lagrange-Algorithmus auf dem Verfahren der alternierenden Richtung von Multiplikatoren (Alternating Direction Method of Multipliers) basiert.

3. Verfahren nach Anspruch 1 oder 2, **dadurch gekennzeichnet, dass** die geometrische 3D-Hochauflösungs-Rekonstruktion die Verwendung eines Gradientenabstiegs-Optimierungsverfahrens beinhaltet.

4. Verfahren nach Anspruch 1 oder 2, **dadurch gekennzeichnet, dass** die geometrische 3D-Hochauflösungs-Rekonstruktion die Verwendung eines Verfahrens der konjugierten Gradienten beinhaltet.

5. Verfahren nach Anspruch 1 oder 2, **dadurch gekennzeichnet, dass** die geometrische 3D-Hochauflösungs-Rekonstruktion die Verwendung eines GMRES-Verfahrens beinhaltet.

6. Verfahren nach einem der vorstehenden Ansprüche, **dadurch gekennzeichnet, dass** das Rauschminderungsverfahren ein mehrsträngiges Verarbeiten der 3D-Bereiche beinhaltet.

7. Verfahren nach einem der vorstehenden Ansprüche, **dadurch gekennzeichnet, dass** die isotrope 3D-Bildabschätzung durch Mitteln der erhaltenen anisotropen Bilder ermittelt wird.

8. Verfahren nach einem der vorstehenden Ansprüche, **dadurch gekennzeichnet, dass** Rauschminderungsverfahren auf einem Transformieren-Trunkieren-Invertieren-Schema basiert, mit den folgenden Schritten für jeden berücksichtigten Bereich:

- Erzeugen eines Verzeichnisses von ähnlichen Bereichen durch Absuchen eines, den berücksichtigten Bereich umgebenden Fensters;
- Transformieren ähnlicher Bereiche und des berücksichtigten Bereichs in eine Basis, die es ermöglicht die Ähnlichkeit des betreffenden Bereichs mit dem Verzeichnis zu nutzen;
- Trunkieren oder Anwenden des Schwellenwertverfahrens von/auf Koeffizienten, die die berücksichtigten Bereiche beschreiben, in der transformierten Basis, um nur die signifikantesten Koeffizienten zu behalten; und
- inverse Transformation der berücksichtigten Bereiche, sodass diese rauschgeminderte Bereiche bilden.

9. Verfahren nach Anspruch 8, **dadurch gekennzeichnet, dass** das Verzeichnis aus einer 2D-Matrix oder einer N-dimensionalen Tabelle von Bereichen gebildet ist, wobei N größer oder gleich 3 ist.

10. Verfahren nach Anspruch 8, **dadurch gekennzeichnet, dass** die Transformation eine SVD-Zerlegung beinhaltet.

11. Verfahren nach Anspruch 8, **dadurch gekennzeichnet, dass** die Transformation HOSVD-Zerlegung, Tensor-SVD-Zerlegung oder eine Wavelet-Transformation beinhaltet.

12. Verfahren nach einem der vorstehenden Ansprüche, **dadurch gekennzeichnet, dass** der Erfassungsschritt von einem Bilderfassungsalgorithmus gefolgt wird, um die Objektbewegung zu kompensieren.

13. Verfahren nach einem der Ansprüche 1 bis 11, **dadurch gekennzeichnet, dass** der Erfassungsschritt von einem GRICS-Verfahren gefolgt wird, um die Objektbewegung zu kompensieren.

14. Verfahren nach einem der Ansprüche 1 bis 11, **dadurch gekennzeichnet, dass** Mehrschichtbilder erfasst werden und der Erfassungsschritt von einem Bilderfassungsalgorithmus und/oder einer Schicht-zu-Volumen-Erfassung gefolgt wird, um die Objektbewegung zu kompensieren.

**15.** Verfahren nach einem der Ansprüche 1 bis 13, **dadurch gekennzeichnet, dass** der Erfassungsschritt das Erhalten von drei anisotropen 3D-Bildern aus beliebigen Volumen-Orientierungen beinhaltet.

**16.** Verfahren nach einem der Ansprüche 1 bis 13, **dadurch gekennzeichnet. dass** der Erfassungsschritt das Erhalten von drei anisotropen 3D-Bildern aus Transversal-, Sagittal und Frontalebenen beinhaltet.

**17.** Verfahren nach einem der vorstehenden Ansprüche, **dadurch gekennzeichnet, dass** eine Größe $n$ ($n$ x $n$ x $n$) eines jeden 3D-Bereichs zwischen 1 und 15, bevorzugt größer oder gleich 2 (2x2x2), besonders bevorzugt gleich 10 (10x10x10) gewählt wird.

**18.** Verfahren nach einem der vorstehenden Ansprüche, **dadurch gekennzeichnet, dass** während des geometrischen 3D-Hochauflösungs-Rekonstruktionsschritts, ein Überlappungsparameter p von Bereichen größer als 1, bevorzugt gleich 4 gewählt.

**19.** Vorrichtung zum Erzeugen eines isotropen 3D-Bildes, wobei die Vorrichtung ein dauerhaftes, materielles computerlesbares Medium aufweist, dass computerausführbare Befehle zum Durchführen eines Verfahrens trägt, das die folgenden Schritte aufweist:

a) Berücksichtigen zumindest zweier anisotroper 3D-Bilder oder anisotroper 2D-Mehrschichtbilder eines Objekts,
b) Ermitteln einer isotropen 3D-Bildabschätzung aus den zumindest zwei anisotropen 3D-Bildern,
c) Anwenden eines Rauschminderungsverfahrens und eines 3D-Hochauflösungs-Rekonstruktionsalgorithmus, beide verbunden in einem Optimierungsproblem mit Nebenbedingungen, welches mittels eines erweiterten Lagrange-Algorithmus durch Ausführen der folgenden Schritte lösbar ist:
d) Definieren von 3D-Bereichen in der isotrope Bildabschätzung, wobei diese Abschätzung aus Schritt b) bei Iteration i=0 erhalten wird, und diese Ab-schätzung aus Schritt f) bei Iteration i+1 erhalten wird,
e) Anwenden eines Rauschminderungsverfahrens auf diese 3D-Bereiche, um rauschgeminderte 3D-Bereiche zu erhalten,
f) Anwenden einer geometrischen 3D-Hochauflösungs-Rekonstruktion auf Basis der rauschgeminderten 3D-Bereiche, die als Vorläufer zum Erstellen des isotropen 3D-Bildes verendet werden; wobei die geometrische 3D-Hochauflösungs-Rekonstruktion die Abschätzungen eines erweiterten Lagrange-Algorithmus beinhaltet,
g) Aktualisieren der erweiterten Lagrange-Abschätzungen,
h) Wiederholen der Schritte d-h bis die Abschätzungen ein Stopp-Kriterium erfüllen.

**20.** System zum Erzeugen eines isotropen 3D-Bildes, mit:

einer Bildgebungsvorrichtung, eingerichtet zum (a) Erhalten zumindest zweier anisotroper 3D-Bilder oder anisotroper 2D-Mehrschichtbilder eines Objekts;
einem Bilddatenprozessor, eingerichtet zum:

b) Ermitteln einer isotropen 3D-Bildabschätzung aus den zumindest zwei anisotropen 3D-Bildern,
c) Anwenden eines Rauschminderungsverfahrens und eines 3D-Hochauflösungs-Rekonstruktionsalgorithmus, beide verbunden in einem Optimierungsproblem mit Nebenbedingungen, welches mittels eines erweiterten Lagrange-Algorithmus durch Ausführen der folgenden Schritte lösbar ist:
d) Definieren von 3D-Bereichen in der isotrope Bildabschätzung, wobei diese Ab-schätzung aus Schritt b) bei Iteration i=0 erhalten wird, und diese Ab-schätzung aus Schritt f) bei Iteration i+1 erhalten wird,
e) Anwenden eines Rauschminderungsverfahrens auf diese 3D-Bereiche, um rauschgeminderte 3D-Bereiche zu erhalten,
f) Anwenden einer geometrischen 3D-Hochauflösungs-Rekonstruktion auf Basis der rauschgeminderten 3D-Bereiche, die als Vorläufer zum Erstellen des isotropen 3D-Bildes verendet werden; wobei die geometrische 3D-Hochauflösungs-Rekonstruktion die Abschätzungen eines erweiterten Lagrange-Algorithmus beinhaltet,
g) Aktualisieren der erweiterten Lagrange-Abschätzungen,
h) Wiederholen der Schritte d-h bis die Abschätzungen ein Stopp-Kriterium erfüllen.

**21.** System nach Anspruch 20, **dadurch gekennzeichnet, dass** es mehrere Prozessoren aufweist, um das Rauschminderungsverfahren durch mehrsträngiges Verarbeiten der 3D-Bereiche durchzuführen.

**Revendications**

1. Procédé de production d'une image 3D isotrope, ledit procédé comprenant les étapes suivantes :

   a) l'acquisition d'au moins deux images 3D anisotropes ou images multicoupes 2D anisotropes d'un objet,
   b) la détermination d'une estimation d'image 3D isotrope à partir desdites au moins deux images 3D anisotropes,
   c) l'application d'une technique de débruitage et d'un algorithme de reconstruction en super-résolution 3D, combinés tous les deux dans un problème d'optimisation sous contraintes qui peut être résolu par un algorithme du Lagrangien augmenté, en réalisant les étapes suivantes :
   d) définition de patchs 3D dans l'estimation d'image 3D isotrope, à l'itération i=0, cette estimation étant obtenue à partir de l'étape b), à l'itération i+1 cette estimation étant obtenue à partir de l'étape f),
   e) application d'une technique de débruitage sur lesdits patchs 3D afin d'obtenir des patchs 3D débruités,
   f) l'application d'une reconstruction géométrique en super-résolution 3D sur la base des patchs 3D débruités utilisés préalablement pour produire l'image 3D isotrope ; la reconstruction géométrique en super-résolution 3D comportant des estimations d'un algorithme du Lagrangien augmenté,
   g) l'actualisation des estimations du Lagrangien augmenté,
   h) la répétition des étapes d à h jusqu'à ce que les estimations satisfassent un critère d'arrêt.

2. Procédé selon la revendication 1, **caractérisé en ce que** l'algorithme du Lagrangien augmenté est basé sur une méthode des directions alternées de multiplicateurs.

3. Procédé selon la revendication 1 ou 2, **caractérisé en ce que** la reconstruction géométrique en super-résolution 3D comprend l'utilisation d'une méthode d'optimisation de descente de gradient.

4. Procédé selon la revendication 1 or 2, **caractérisé en ce que** la reconstruction géométrique en super-résolution 3D comprend l'utilisation d'une méthode du gradient conjugué.

5. Procédé selon la revendication 1 or 2, **caractérisé en ce que** la reconstruction géométrique en super-résolution 3D comprend l'utilisation d'une généralisation de la méthode de minimisation du résidu (GMRES).

6. Procédé selon l'une quelconque des revendications précédentes, **caractérisé en ce que** la technique de débruitage comprend le multithreading du traitement de patchs 3D.

7. Procédé selon l'une quelconque des revendications précédentes, **caractérisé en ce que** l'estimation d'image 3D isotrope est déterminée en moyennant les images anisotropes acquises.

8. Procédé selon l'une quelconque des revendications précédentes, **caractérisé en ce que** la technique de débruitage est basée sur un mécanisme de transformée-troncature-inversion comprenant les étapes suivantes pour chaque patch considéré :

   - la construction d'un dictionnaire de patchs similaires par recherche dans une fenêtre entourant le patch considéré ;
   - la transformation de patchs similaires et d'un patch considéré en une base permettant d'exploiter la similarité du patch considéré avec le dictionnaire ;
   - la troncature ou le seuillage de coefficients décrivant le patch considéré dans la base transformée, afin de conserver uniquement les coefficients de poids fort ; et
   - la transformation inverse du patch considéré pour former le patch débruité.

9. Procédé selon la revendication 8, **caractérisé en ce que** le dictionnaire est composé d'une matrice 2D ou d'une table de N dimensions, N étant supérieur ou égal à 3, de patchs.

10. Procédé selon la revendication 8, **caractérisé en ce que** la transformation comprend une décomposition en valeurs singulières.

11. Procédé selon la revendication 8, **caractérisé en ce que** la transformation comprend une décomposition en valeurs singulières d'ordre supérieur HOSVD, une décomposition en valeurs singulières de tenseur ou une transformée en ondelettes.

**12.** Procédé selon l'une quelconque des revendications précédentes, **caractérisé en ce que** l'étape d'acquisition est suivie par un algorithme d'enregistrement d'image afin de compenser un mouvement de l'objet.

**13.** Procédé selon l'une quelconque des revendications 1 à 11, **caractérisé en ce que** l'étape d'acquisition est suivie par une technique GRICS afin de compenser un mouvement de l'objet.

**14.** Procédé selon l'une quelconque des revendications 1 à 11, **caractérisé en ce que** les images multicoupes sont acquises et l'étape d'acquisition est suivie par un algorithme d'enregistrement d'image et/ou une mise en correspondance coupe vers volume afin de compenser un mouvement de l'objet.

**15.** Procédé selon l'une quelconque des revendications 1 à 13, **caractérisé en ce que** l'étape d'acquisition comprend l'acquisition de trois images 3D anisotropes à partir d'orientations de volume arbitraires.

**16.** Procédé selon l'une quelconque des revendications 1 à 13, **caractérisé en ce que** l'étape d'acquisition comprend l'acquisition de trois images 3D anisotropes à partir de plans axial, sagittal et coronal.

**17.** Procédé selon l'une quelconque des revendications précédentes, **caractérisé en ce qu'**une taille $n$ ($n$ x $n$ x $n$) de chaque patch 3D est choisie entre 1 et 15, de préférence supérieur ou égal à 2 (2x2x2), idéalement égal à 10 (10x10x10).

**18.** Procédé selon l'une quelconque des revendications précédentes, **caractérisé en ce que** durant l'étape de reconstruction géométrique en super-résolution 3D, un paramètre de chevauchement $p$ de patchs et choisi supérieur à 1, de préférence égal à 4.

**19.** Dispositif de production d'une image 3D isotrope, ledit dispositif comprenant un support non transitoire, tangible, lisible par ordinateur renfermant des instructions exécutables par ordinateur pour réaliser un procédé comprenant les étapes suivantes :

a) la considération d'au moins deux images anisotropes 3D ou images multicoupes anisotropes 2D d'un objet,
b) la détermination d'une estimation d'image 3D isotrope à partir desdites au moins deux images 3D anisotropes,
c) l'application d'une technique de débruitage et d'un algorithme de reconstruction en super-résolution 3D, combinés tous les deux dans un problème d'optimisation sous contraintes qui peut être résolu par un algorithme du Lagrangien augmenté, en réalisant les étapes suivantes :
d) définition de patchs 3D dans l'estimation d'image 3D isotrope, à l'itération i=0, cette estimation étant obtenue à partir de l'étape b), à l'itération i+1 cette estimation étant obtenue à partir de l'étape f),
e) application d'une technique de débruitage sur lesdits patchs 3 afin d'obtenir des patchs 3D débruités,
f) l'application d'une reconstruction géométrique en super-résolution 3D sur la base des patchs 3D débruités utilisés préalablement pour produire à la production de l'image 3D isotrope ; la reconstruction géométrique en super-résolution 3D comportant des estimations d'un algorithme du Lagrangien augmenté,
g) l'actualisation des estimations du Lagrangien augmenté,
h) la répétition des étapes d à h jusqu'à ce que les estimations satisfassent un critère d'arrêt.

**20.** Système de production d'une image 3D isotrope, le système comprenant : un dispositif d'imagerie configuré pour a) acquérir au moins deux images 3D anisotropes ou images multicoupes 2D anisotropes d'un objet, un processeur de données d'image configuré pour :

b) déterminer une estimation d'image 3D isotrope à partir desdites au moins deux images 3D anisotropes,
c) appliquer une technique de débruitage et un algorithme de reconstruction en super-résolution 3D, combinés tous les deux dans un problème d'optimisation sous contraintes qui peut être résolu par un algorithme du Lagrangien augmenté, en réalisant les étapes suivantes :
d) définition de patchs 3D dans l'estimation d'image 3D isotrope, à l'itération i=0, cette estimation étant obtenue à partir de l'étape b), à l'itération i+1 cette estimation étant obtenue à partir de l'étape f),
e) application d'une technique de débruitage sur lesdits patchs 3D afin d'obtenir des patchs 3D débruités,
f) application d'une reconstruction géométrique en super-résolution 3D sur la base des patchs 3D débruités utilisés préalablement pour produire l'image 3D isotrope ; la reconstruction géométrique en super-résolution 3D comportant des estimations d'un algorithme du Lagrangien augmenté,
g) actualisation des estimations du Lagrangien augmenté,
h) répéter les étapes d à h jusqu'à ce que les estimations satisfassent un critère d'arrêt.

**21.** Système selon la revendication 20, **caractérisé en ce qu'**il comprend plusieurs processeurs pour réaliser la technique de débruitage par multithreading du traitement des patchs 3D.

FIGURE 1

**FIGURE 2**

EP 3 486 864 B1

FIGURE 3

FIGURE 4

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150287223 A1

### Non-patent literature cited in the description

- **F. ODILLE ; A. BUSTIN ; B. CHEN ; P. VUISSOZ ; J. FELBLINGER.** Motion-Corrected, Super-Resolution Reconstruction for High-Resolution 3D Cardiac Cine MRI. *Med. Image Comput. Comput. Assist. Interv.,* 2015, vol. 9351, 435-442
- **ALAA A. HEFNAWY.** An efficient super-resolution approach for obtaining isotropic 3-D imaging using 2-D multi-slice MRI. *Egyptian Informatics Journal,* 2013, vol. 14, 117-123
- **K. K. BHATIA ; A. N. PRICE ; W. SHI ; J. V HAJNAL ; D. RUECKERT.** *Super-Resolution Reconstruction of Cardiac MRI Using Coupled Dictionary Learning,* 2014, 947-950
- **P. COUPÉ.** Collaborative patch-based super-resolution for diffusion-weighted images. *Neuroimage,* 2013, vol. 83, 245-261
- **J. V. MANJÓN ; P. COUPÉ ; A. BUADES ; D. L. COLLINS ; M. ROBLES.** MRI superresolution using self-similarity and image priors. *Int. J. Biomed. Imaging,* 2010, vol. 2010